Europäisches Patentamt

European Patent Office

Office européen des brevets

(11) Publication number: **0 263 346 B1**

## EUROPEAN PATENT SPECIFICATION

(45) Date of publication of patent specification: **13.05.92**

(51) Int. Cl.⁵: **B60G 17/00**, F16K 31/40, F16K 31/06

(21) Application number: **87113799.8**

(22) Date of filing: **22.09.87**

(54) **Two-way fluid valve.**

(30) Priority: **03.10.86 GB 8623860**

(43) Date of publication of application:
**13.04.88 Bulletin 88/15**

(45) Publication of the grant of the patent:
**13.05.92 Bulletin 92/20**

(84) Designated Contracting States:
**DE FR GB IT**

(56) References cited:
**FR-A- 2 578 617**

(73) Proprietor: **Eaton S.A.M.**
**17 Boulevard Prince Héréditaire Prince Albert**
**Monaco 98000(MC)**

(72) Inventor: **de Raco, Maurice**
**Ouartier Saint-Mathieu Chemin de Piechal**
**F-06130 Grasse(FR)**
Inventor: **Parola, Elio**
**Le Venise e 143 BD de Cessole**
**F-06100 Nice(FR)**

(74) Representative: **Douglas, John Andrew**
**Eaton House Staines Road**
**Hounslow Middlesex TW4 5DX(GB)**

## Description

The present invention relates to a controlled fluid valve having two ports which for descriptive convenience will herein be identified as inlet and outlet ports.

It is often desirable to be able to do any of the following to a region of normally high fluid pressure, namely:-

(1) isolate it for long periods,

(2) charge it up to a higher pressure, or

(3) discharge it to lower or atmospheric pressure reasonably quickly but not too abruptly.

The fluid may be hydraulic oil and the region may be a vehicle suspension unit for dampening and cushioning shocks in the ride. Although hydraulic dampers, or hydraulic spring dampers have long been known as individual units, systems where the units can be pumped up or discharged from a central system are more recent. Such a centrally controlled unit needs to be charged and discharged eg if the driver desires to harden or soften the suspension, or if there are fluid leaks, and anyway the suspension units should be isolated from other components in the hydraulic circuit which may consume or leak fluid. The pressure variations substained by a suspension unit on a bad ground surface are considerable, and the valve isolation should withstand these variations.

The valve when used in a vehicle hydraulic suspension would best be used, one between each suspension unit or jack and the pressure adjuster or corrector, whether the latter be automatic or manual. Sometimes, due to leakages in other parts of the hydraulic circuit, a suspension loses charge and a parked vehicle settles inelegantly or assymmetrically until the vehicle is again started and the suspensions recharged hydraulically. Although the vehicle, once moving, would be properly suspended and no damage or technical prejudice would occur, the sight of eg road vehicles settled in unaesthetic dispositions can bring derision on the vehicle or its driver.

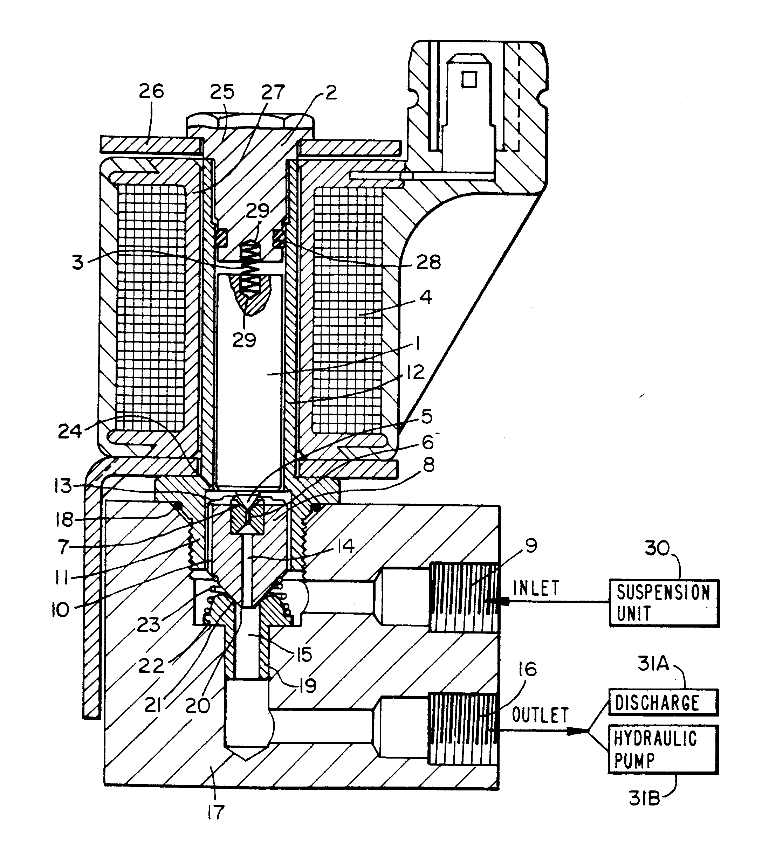

FR -A-2 578 617 is the state of the art describes an all or nothing two-port valve having a piloted valve with a flap tending to be held closing a port against a weak spring, by a stronger spring between divided armature members. Moreover, the valve is intended to be connected oppositely to that of the present invention, because the reference flap opens a fluid way between the utilization position (eg a suspension unit) and the interior of the housing. Also, the reference valve is described and illustrated with relatively flat (not conical or needle-pointed) moving closure members which could not maintain pressure differences for long periods. The latter deduction is reinforced by connection of the reference utilization not to the interior of the valve by always-open passages (such as annular moderately restrictive passage 10 herein illustrated), but only to a port referenced 5 in the French Specification normally shut off by a pilot flap. The reference describes no abutment such as 24 in the present embodiment (which needs cooperative shaping to prevent fluid closure). Figure 6 of the reference only shows re-closure when the flap is lifted, because this reference only considers communicating the two ports together. Therefore, the main problems met by the present inventor could not be among the considerations of the reference inventor. This reference discloses structure according to the pre-characterizing portion of Claim 1.

The invention is characterized by Claim 1. A feature of the invention is that the input pressure is used at a sensing space (13) to aid spring pressure in maintaining the valve closed except when the valve is controlled open.

Initial discharging or purging of high pressures should be gradual, to avoid embarrassing noises or structurally prejudicial rapid settling of the vehicle with collapse of the suspension units. Hence the control or pilot fluid passage should be sized limitedly, for slow response to opening of a pilot channel.

Another feature is the valve opens very slowly. Discharging of initially very high pressures is not therefore accompanied by high noise or heating or other unwanted rapid changes.

Since the valve would be a series element in the inflating, ie hardening of the suspension, it should preferably not introduce undue pressure drops or energy losses. The exit path of preferred embodiments are therefore sized adequately.

Further features and advantages will appear from the following description of an embodiment of hydraulic valve according to the invention shown in the sole Figure in side diametrical section.

The valve has a movable armature 1 cooperative with a fixed armature 2 to rise and compress a return spring 3 when a solonoid coil 4 is energized. In rising, an integral conical closure needle portion 5, which normally obturates a limited pilot passage 6 in a push-fitted insert 7 located centrally in a flap 8, opens the passage 6 to fluid flow. The flap is a delayed movement flap, ie it only moves a finite time after being commanded to move.

The valve has a first inlet port 9 which always communicates, via a side passage 10 (between the flap 8 and a tubular extension 1 of a non-magnetic axial guide 12 for the soft steel movable armature 1), with a space 13 above the valve flap 8. Whatever pressure exists at the inlet port, then, is equalled in space 13 if passage 6 is closed by needle 5, and is almost equalled in space 13 if passage 6 has just been opened by raising of the obturating needle 5. This is because the resistance to fluid flow through passage 10 and across space 13 is designed to be much less than the resistance to fluid flow in pilot passage 6. Passage 10 may be multiple channels, or annular, or in any way adequate to maintain space 13 at about the same pressure as that at inlet 9.

The flap is axially bored at 14, if desired not as constrictedly as passage 6 with which it is continuous, and this leads via an exit bore 15 to an outlet port 16, the second port of the valve. The inlet and outlet ports are formed, fitted or screwed, as desired, in an aluminium block 17 in which are also fitted two more items, namely the tubular extention 11 screwed in (preferably against one or more sealing O-rings 18) and also, by force fit, a valve seat body 19 for the conical end 20 of flap 8 to seat at 21.

The valve seat body 19 includes exit bore 15 axially within it and also an abutment flange 22 against which a weak compression spring 23 tends to raise flap 8 from its seat 21, this happens when both of the following occur, namely (1) when the pressure at the outlet port 16 at least almost equals that at space 13 (ie the two ports have nearly equal pressure), and (2) the movable armature and its needle 5 have been raised. Otherwise spring 3 and/or pressure at space 13 keep the flap on its seat. The exit bore 15 has preferably a cross-section matching that of the inlet port 9, to assist avoidance of flow energy losses on reverse flow, outlet-to-inlet.

For the last reason, it is preferable that the spring 3 is strong enough to overcome spring 23 on non-energization or after switch-off of the coil, whatever the relative pressures. Yet spring 3 must be overcome by the mobile armature when electromagnetically raised.

The armature guide 12 or any other fixed member of the valve or the valve body 17, must have one or more abutments 24, perhaps annular, to limit the rise, of the flap under all conditions, relative to the needle 5 when raised, in order to prevent the raised needle obturating the constricted passage 6. Spring 23 or excess pressure at exit 16 can then never push the flap upwards onto the raised needle.

The abutment(s) 24 must peform this limiting action without obstructing fluid flow across space 13. Hence the form or disposition of the abutments and/or the top of the valve flap must be such as to allow such fluid flow. Presently preferred are radial grooves (not illustrated) in the top surface of the flap, but many shapings will suggest themselves. Enough area of the flap top must be exposed to the fluid pressure, to give sufficient downward force to overcome spring 23 and seat the flap until the port pressures are nearly enough equalized.

The fixed armature 2 may have a flanged top 25 to clamp an annular soft steel magnetic circuit member 26 against non-magnetic coil former 27 when screwed into valve guide 12 and also compressing a gasket 28. Both armatures may have central blind bores 29 to accommodate return spring 3. Other mechanical details are routine and variable within the scope of the claims.

The valve is most useful intermediate a vehicle hydraulic oil suspension unit 30 (such as on some Citroen cars and other vehicles) connected to its "input" port and a pump 31 at its outlet port 16. There are several conditions and requirements met by this valve.

A. The vehicle is stationary, perhaps for several days. Pump 31 and solonoid 4 are not energized. Needle 5 obturates flap passages 6 (and hence 14). Therefore residual pressure in the suspension jack 30 reaches space 13 and exceeds that (atmospheric) at the exit passage 15 and outlet port 16. The flap is held firmly against seat 21 by the residual pressure, and the disposition of the vehicle is maintained without further loss of pressure in the suspension and therefore without settlement or collapse.

B. It is desired to lower moderately the suspension pressure, ie soften the ride. The coil but not the pump is energized, and residual pressure reaches space 13 and holds the conical flap end 20 down on seat 21. The fluid gradually escapes to the outlet 16, but the flap stays down. When the pressure has been reduced to give the softness desired, the solenoid is de-energized, needle 5 falls and obturates passage 6 firmly under action of spring 3. This suspension pressure will now continue at its present value until changed again. The escape fluid flow is slow, quiet and easy to stop quietly when required. Offensive or embarrassing noise is not created.

C. A drastic or total discharge of the suspension pressure is required, eg for overhaul, change of suspension units, vehicle axles etc. The above procedure B continues gradually and quietly, with the coil energized and the needle non-obturating, until the difference of pressures between space 13 and exit 15 can no longer hold the flap down against spring 23. The outlet and inlet pressures can now equalize rapidly, without prejudicial stresses since the inequality was already relatively small. This second discharge stage is initiated at a pressure difference determined by selection of the compression of spring 23 and of the flap areas exposed to the pressures. Such a two-stage discharge is a very advantageous application of this valve.

D. If the suspension is to be slightly hardened, the pump 31 must be energized and also the needle raised, because the pressure difference will not itself raise flap and the needle and armature against spring 3 without electromagnetic help. Charging of the suspension jack 30 occurs then past the opened flap seat 21, via the "exit" orifice 15 (now serving as an entry). Substantial advantage occurs if the flow resistance in bore 15 is about equal to that towards the region of the inlet port 9 as above-mentioned. This avoids undesirable or excessive pressure difference, energy losses, turbulence and noise, especially when this reverse, outlet-to-inlet flow exists, as when pumping up the suspension from a high pressure pump.

E. If unit 30 is to be pumped up drastically, or from atmospheric, the solonoid valve need not be electrically energized, since the fluid force on the conical tip 20 of the flap will greatly exceed any downward force on the flap developed in space 13. The flap will force the needle and mobile armature upwards, and rapid "inflation" will occur.

Important features are, the two-step discharge when the latter is to be drastic; the shape of the flap, the grooving or fluid flow facility at the top of the flap even when fully up against abutment 24; the nature of abutment 24 to prevent the raised flap obturating its seating and passage 6 against needle 5; A preferable feature is the relatively greater strength of armature spring 3 compared with flap spring 23. The relative flows in moderately restricted passage 10 and space 13 relative to constricted passage 6 will be critical, and selected in accordance with accepted pressure differences.

## Claims

1. A two port fluid valve comprising; a valve body housing (17,12);

control means (1-5) to open or close a restrictive passage (6) between the ports; and

a valve flap (8) arranged automatically but conditionally to open a relatively non-restrictive passage (15) between the ports, ie only when the pressure at a first port (9) of the two does not exceed that at the other, second port (16) by more than a threshold margin determined in part by spring bias (3), but at other times to maintain it closed, the automatic arrangement including:-

an always open, moderately restricted passage (10), less restrictive than said restrictive passage (6, 14), between the first port (9) and a pressure-sensing space (13) contiguous with the flap (8); wherein

the pressure of fluid at said space is determined by that prevailing at the first port (9);

said space is so located that pressure of fluid at said space exerts a closing force on the flap towards its position of closure of the relatively non-restrictive passage (15) between the ports; and

said flap is subjected at a portion thereof (20) to an opening force derived from the pressure at the time prevailing at the second port (16), characterized in that the valve body housing comprises one or more fixed abutments (24) to limit opening movements of the flap under all conditions, in order to counteract the adverse tendency of the flap to re-close said restrictive passage (6) on the opening of said non-restrictive passage (15).

2. A fluid valve according to claim 1, wherein the non-restrictive passage (15) is dimensioned to have a cross-section matching that of the remainder of the most direct conduit-ways in the valve between the ports.

3. A fluid valve according to claims 1 or 2, wherein said moderately restrictive passage (10) is located between a guide portion (11) of the valve body and the flap (8) along a region transverse to the flap as regards its opening and closing movements.

4. A fluid valve according to claims 1, 2 or 3, wherein the relatively non-restrictive passage (15) is located such that pressure in this passage exerts said opening force on the flap.

5. A fluid valve according to claims 1-4, wherein the control means operates a needle and seat closure of the restrictive passage, said one or more fixed abutments (24) of the valve body housing limiting opening movements and thereby preventing needle-and-seat contact and obturation of the restrictive passage, other than when said control means commands closure of the restrictive passage.

6. A fluid valve according to claim 5, wherein the abutment and/or surface of the valve flap surrounding the valve seat, are arranged, eg by groovings or other shapings, so as not to inhibit fluid passage across said sensing space (13).

7. A fluid valve according to any of claims 1-6, the valve being mounted on a fluid-pressurized suspension unit of a vehicle and having its first port (9) connected to the fluidway of the suspension and its second port (16) connected to a fluid pressure selecting system (31A or 31B), for providing (a) a normal long-term fluid tightness or, under control of said valve control means (1-5), (b) facility of either an initial low-rate and a delayed high rate discharge, or (c) a low-loss charge of the suspension unit, eg by hydraulic oil fluid.

8. Vehicle having multiple such suspension units (30) according to claim 7, a respective such valve intermediate each unit and a common pressure fluid supply and cut-off system (31).

**Revendications**

1. Une valve à deux orifices pour liquide comprenant un boîtier de corps de soupapes (17, 12) ;

des moyens de commande (1 - 5) pour ouvrir ou fermer une communication (6) restrictive entre les orifices ; et un clapet de soupape (8) conçu pour ouvrir automatiquement, mais sous certaines conditions, un passage (15) relativement non restrictif, ceci seulement lorsque la pression présente à un premier orifice (9) n'excède pas celle qui est présente sur un deuxième orifice (16) avec un excédent supérieur à une valeur de seuil qui est déterminée en partie par le ressort de retenue (3), mais aussi pour maintenir ledit passage fermé dans d'autres cas, ledit dispositif automatique comportant :

un passage modérément restrictif (10) toujours ouvert, moins restrictif que le passage (6, 14) précité, prévu entre le premier orifice (9) et un espace (13) sensible à la pression, adjacent au clapet (8) ; de sorte

que la pression du liquide, dans ledit espace, est déterminée par celle qui règne au premier orifice (9) ;

que ledit espace est situé de telle manière, que la pression du liquide présent dans cet espace exerce sur le clapet une force dans le sens de la fermeture, pour obturer le passage relativement non restrictif (15) disposé entre les deux orifices ;

et qu'une partie (20) dudit clapet est soumise à une force agissant dans le sens de l'ouverture qui est déterminée par la pression qui règne à l'instant considéré au deuxième orifice (16);

l'ensemble étant caractérisé par le fait que le boîtier du corps de soupapes un ou plusieurs éléments de butée fixes (24), pour limiter les déplacements du clapet dans le sens de l'ouverture, quelles que soient les conditions, afin d'éviter que le clapet n'ait tendance à refermer ledit passage restrictif (6) lorsque s'ouvre le passage non restrictif (15).

2. Une valve pour liquide selon la revendication 1 caractérisée par le fait

que le passage non restrictif (15) est dimensionné de manière à présenter une section transversale adaptée à celle des autres chemins d'écoulement, les plus directs, sur le trajet entre les deux orifices.

3. Une valve pour liquide selon les revendications 1 ou 2, caractérisée par le fait

que ledit passage modérément restrictif (10) est situé entre une zone de guidage (11) du corps de soupapes et le clapet (8) le long d'une région transversale par rapport au clapet relativement aux déplacements d'ouverture et de fermeture de celui-ci.

4. Une valve pour liquide selon les revendications 1, 2 ou 3, caractérisée par le fait que le passage non restrictif (15) est situé de manière que la pression qui règne dans ledit passage développe ladite force dans le sens de l'ouverture dudit clapet.

5. Une valve pour liquide selon l'une quelconque des revendications 1 à 4, caractérisée par le fait

que le moyen de commande actionne un système obturateur du passage restrictif, comportant un pointeau et un siège, lesdits un ou plusieurs éléments de butée fixes (24), prévus sur le boîtier du corps de soupapes, limitent les déplacements dans le sens de l'ouverture et évitant ainsi la venue en contact du siège avec le pointeau, sauf lorsque ledit moyen de commande prescrit l'obturation dudit passage restrictif.

6. Une valve pour liquide selon la revendication 5, caractérisée par le fait

que l'extrémité et/ou la surface du clapet entourant le siège de la soupape sont structurées, par entaillage ou par quelque autre méthode, de manière à ne pas empêcher le passage du liquide dans ledit espace (13) sensible à la pression.

7. Une valve pour liquide selon l'une quelconque des revendications 1 à 6, caractérisée par le fait

que ladite valve est montée sur un dispositif de suspension hydraulique de véhicule, avec son premier orifice (9) connecté à l'arrivée du liquide dans le dispositif de suspension et son deuxième orifice (16) est connecté à un système de sélection de la pression (31A ou 31B) du liquide, permettant d'obtenir

(a) une étanchéité à long terme normale pour le liquide ou bien sous l'action desdits moyens de commande de la valve (1-5),

(b) soit la possibilité d'une réduction de la pression du liquide hydraulique sans le système de suspension, lente pour commencer puis rapide après une temporisation, ou bien

(c) la remise sous pression, avec de faibles pertes, du système de suspension, par exemple avec du liquide hydraulique, de l'huile.

8. Un véhicule équipé d'un certain nombre de tels dispositifs de suspension (30) selon la revendication 7, chacun associé avec une telle valve insérée dans son alimentation en liquide hydraulique, et raccordés à un système commun d'alimentation en liquide sous pression et de décharge (31).

## Patentansprüche

1. Ventil mit zwei Anschlüssen für Fluide, mit einem Ventilgehäusekörper (17,12),

Steuermitteln (1-5) zum Öffnen oder Schließen eines drosselnden Kanals (6) zwischen den Anschlüssen sowie

einem Ventilverschlußglied (8), das dazu vorgesehen ist, automatisch, aber zustandsabhängig, einen im wesentlichen drosselfreien Kanal (15) zwischen den Anschlüssen zu öffnen, d.h. nur dann zu öffnen, wenn der Druck an einem ersten Anschluß (9) von den beiden den Druck an dem anderen zweiten Anschluß (16) um nicht mehr als einen Grenzwert überschreitet, der zum Teil von einer Vorspannfeder (3) bestimmt wird, aber diesen (Kanal) ansonsten geschlossen zu halten, wobei die automatische Vorrichtung folgendes umfaßt:

einen ständig geöffneten, mäßig drosselnden Kanal (10) der weniger drosselnd ist als der drosselnde Kanal (6,14) und der sich zwischen dem ersten Anschluß und einem druckmessenden, an das Verschlußglied (8) anschließenden Raum (13) befindet, wobei

der Druck des Fluids in diesem Raum von dem an dem ersten Anschluß (9) anstehenden Druck bestimmt wird;

der Raum so angeordnet ist, daß der Druck des Fluids in diesem Raum eine schließende Kraft auf das Verschlußglied in Richtung der geschlossenen Position des im wesentlichen drosselfreien Kanals (15) zwischen den Anschlüssen ausübt, und

das Verschlußglied in einem seiner Bereiche (20) einer öffnenden Kraft ausgesetzt ist, die von dem zu der Zeit an dem zweiten Anschluß (16) anstehenden Druck abgeleitet ist, dadurch gekennzeichnet, daß

der Ventilgehäusekörper einen oder mehrere feste Anschläge (24) aufweist, die die Öffnungsbewegungen des Verschlußgliedes unter allen Bedingungen begrenzen und der störenden Tendenz des Verschlußgliedes entgegenwirken, den drosselnden Kanal (6) bei der Öffnung des drosselfreien Kanals (15) wieder zu verschließen.

2. Ventil für Fluide nach Anspruch 1, dadurch gekennzeichnet, daß der drosselfreie Kanal (15) in seinem Querschnitt so dimensioniert ist, daß er an den Rest der direktesten Kanäle zwischen den Ventilanschlüssen angepaßt ist.

3. Ventil für Fluide nach Anspruch 1 oder 2, dadurch gekennzeichnet, daß der mäßig drosselnde Kanal (10) zwischen einem Führungsabschnitt (11) des Ventilgehäuses und dem Verschlußglied (8) entlang einem bezüglich seiner Öffnungs- und Schließbewegung quer zu dem Verschlußglied befindlichen Bereich angeordnet ist.

4. Ventil für Fluide nach Anspruch 1, 2 oder 3, dadurch gekennzeichnet, daß der verhältnismäßig drosselfreie Kanal (15) so angeordnet ist, daß der Druck in diesem Kanal die Öffnungskraft auf das Verschlußglied ausübt.

5. Ventil für Fluide nach den Ansprüchen 1 bis 4, dadurch gekennzeichnet, daß die Steuermittel ein Ventil mit Nadel und Sitz des drosselnden Kanals betätigen, daß der eine oder die mehreren festen Anschläge (24) des Ventilgehäusekörpers die Öffnungsbewegungen begrenzen und dadurch den Kontakt zwischen der Nadel und dem Sitz und das Verschließen des drosselnden Kanals verhindern, wenn nicht die Steuermittel das Verschließen des drosselnden Kanals veranlassen.

6. Ventil für Fluide nach Anspruch 5, dadurch gekennzeichnet, daß der Anschlag und/oder die Oberfläche des Ventilverschlußglieds, die den Ventilsitz umgibt, bspw. durch Nuten oder andere Formgebung so gestaltet sind, daß sie den Fluidstrom durch den Meßraum (13) nicht verhindern.

7. Ventil für Fluide nach einem der Ansprüche 1 bis 6, dadurch gekennzeichnet, daß das Ventil an einer unter Fluiddruck stehenden Radaufhängungseinheit eines Fahrzeugs montiert ist und mit seinem ersten Anschluß (9) mit dem Fluidsystem der Radaufhängung verbunden ist und mit seinem zweiten Anschluß (16) mit einem den Fluiddruck wählenden System (31a oder 31b) verbunden ist, so daß

(a) normalerweise eine Fluiddichtigkeit über lange Zeit oder, gesteuert von den Ventilsteuermitteln (1 - 5),

(b) entweder ein anfänglich mit niedriger Rate und verzögert mit hoher Rate vor sich gehender Druckabbau, oder

(c) eine verlustarme Füllung der Radaufhängungseinheit bspw. mit einem Hydrauliköl ermöglicht wird.

8. Ein Fahrzeug mit mehreren solchen Radaufhängungseinheiten (30) nach Anspruch 7, dadurch gekennzeichnet, daß zwischen jeder Radaufhängungseinheit und einer gemeinsamen Fluid-Druckversorgung mit einem Absperrsystem (31) ein entsprechendes Ventil angeordnet ist.